# EUROPÄISCHE PATENTANMELDUNG

(11) **EP 2 374 843 A1**
(43) Veröffentlichungstag der Anmeldung: **12.10.2011**
(21) Anmeldenummer: 10305352.6
(22) Anmeldetag: 07.04.2010
(51) Int. Cl.: C08K 3/20, C08K 3/22, H01B 3/30

(54) **Alterungsbeständige Polyurethanmischung**

(71) Anmelder: Nexans, 75008 Paris (FR)
(72) Erfinder: Mehl, Alfred, 91166, Georgensgmünd (DE); Gemmel, Alfred, 90502, Kalchreuth (DE); Müller, Friedrich, 91207, Lauf (DE)
(74) Vertreter: Taruttis, Stefan Georg

(57) **Zusammenfassung**

Die Erfindung stellt eine Mischung auf Basis von Polyurethan zur Verwendung als Kabelummantelung bereit, die eine erhöhte Alterungsbeständigkeit hat und zusätzlich zu herkömmlichen Zuschlagsstoffen, insbesondere von Flammschutzmitteln, einen Gehalt an Oxid und/oder Borat eines zwei- oder dreiwertigen Metalls aufweist, wobei das Oxid und/oder Borat vorzugsweise schwer wasserlöslich oder wasserunlöslich sowie anorganisch ist.

## Beschreibung

Die Erfindung betrifft eine alterungsbeständige Polyurethanmischung auf Basis von Polyurethan, die durch den Zusatz von Zuschlagsstoffen einen geringeren Festigkeitsabfall über die Betriebsdauer aufweist. Die erfindungsgemäßen Mischungen zeichnen sich bei einem Gehalt an Flammschutzmitteln durch einen verringerten Festigkeitsabfall über die Betriebsdauer aus, so dass sie widerstandsfähiger gegen Alterung sind.

Insbesondere betrifft die Erfindung elektrische und optische Kabel, die eine Ummantelung aus der erfindungsgemäßen Polyurethanmischung aufweisen, sowie die Verwendung dieser Polyurethanmischung als Kabelummantelung. Das Polyurethan ist vorzugsweise Polyetherurethan, Polyesterurethan oder eine Mischung dieser.

### Stand der Technik

Die EP 1491580 B1 beschreibt Mischungen aus Polyetherurethan, das auch als thermoplastisches Polyurethan (TPU) bezeichnet wird, mit einem Gehalt an Aluminiumhydroxid und/oder Aluminiumoxidtrihydrat, Phosphorsäureester und Bentonit, die der Mischung flammwidrige Eigenschaften verleihen.

Zur Erhöhung der Alterungsbeständigkeit sind beispielsweise die folgenden organischen Verbindungen bekannt: β-Dicumyldiphenylamin (AO-41), 2,2'-Thiodiethylbis-[3-(3,5-di-tert. butyl-4-hydroxyphenyl)-propionat] (AO-25) und Pentaerythrityl-tetrakis-[3-(3,5-di-tert. butyl-4-hydroxyphenyl)-propionat] (AO-18).

### Aufgabe der Erfindung

Die Aufgabe der Erfindung liegt darin, eine verbesserte Mischung auf Basis von Polyurethan bereitzustellen, insbesondere eine Mischung auf Basis von Polyurethan, das mit Flammschutzmitteln versetzt ist, mit einer erhöhten Alterungsbeständigkeit.

### Allgemeine Beschreibung der Erfindung

Die Erfindung löst die Aufgabe mit den Merkmalen der Ansprüche und insbesondere durch Bereitstellen einer Mischung auf Basis von Polyurethan zur Verwendung als Kabelummantelung, die zusätzlich zu herkömmlichen Zuschlagsstoffen, insbesondere von Flammschutzmitteln, einen Gehalt an Oxid und/oder Borat eines zweiwertigen und/oder eines dreiwertigen Metalls aufweist, wobei das Oxid und/oder Borat vorzugsweise schwer wasserlöslich oder wasserunlöslich ist, sowie anorganisch. Das Polyurethan ist vorzugsweise Polyetherurethan und/oder Polyesterurethan.

Bevorzugte zwei- oder dreiwertige Metalle sind solche der 2. und 3. Hauptgruppe, insbesondere Magnesium, Calcium, Barium, Strontium, Bor und Aluminium, sowie Zink. Bevorzugt weist die erfindungsgemäße Mischung ein schwer wasserlösliches oder wasserunlösliches Oxid von Magnesium, Zink, Calcium, Bor und/oder Aluminium auf, insbesondere ein Oxid und/oder Borat von Magnesium, Zink, Calcium und/oder Aluminium, weiter bevorzugt Zink- und/oder Borverbindungen, insbesondere an anorganischen Zink- und/oder Borverbindungen. Besonders bevorzugt weist die erfindungsgemäße Mischung auf Basis von Polyurethan Zinkoxid, Zinkborat, Magnesiumoxid, Magnesiumborat, Aluminiumoxid, Aluminiumborat, und/oder Calciumborat zur Erhöhung der Alterungsbeständigkeit auf.

Die erfindungsgemäße Mischung auf Basis von Polyurethan weist Zuschlagsstoffe auf, die als Flammschutzmittel wirken, insbesondere Aluminiumhydroxid und/oder Magnesiumhydroxid, Phosphorsäureester und/oder ein Schichtsilikat, insbesondere Bentonit.

Besonders bevorzugt kann die erfindungsgemäße Mischung beispielsweise Polyurethan, eine Zinkverbindung und/oder eine Borverbindung, als Flammschutzmittel Aluminiumhydroxid und/oder Magnesiumhydroxid, Phosphorsäureester und/oder Schichtsilikat, optional zusätzlich ein oder mehrere Antioxidantien, z.B. ein organisches Antioxidationsmittel, insbesondere Polyurethan, Aluminiumhydroxid und/oder Magnesiumhydroxid, Phosphorsäureester, Schichtsilikat, sowie Zinkoxid und/oder Zinkborat und/oder Magnesiumborat, aufweisen oder daraus bestehen, wobei das Polyurethan Polyetherurethan, Polyesterurethan oder eine Mischung aus Polyetherurethan und Polyesterurethan ist.

Die erfindungsgemäße Mischung zeichnet sich dadurch aus, dass sie auch nach Alterung, die beispielsweise durch eine Wärmebehandlung bei 113 C° über 7 Tage im Umluftofen simuliert wird, einen verringerten Festigkeitsabfall aufweist, der auf den Gehalt an einer Zinkverbindung und/oder einer Borverbindung zurückgeht.

Die Wirkung, den Festigkeitsabfall bei Alterung zu vermindern, der durch eine Zinkverbindung und/oder eine Borverbindung, insbesondere ein Borat, bei Mischungen von Polyurethan, das insbesondere Polyetherurethan und/oder Polyesterurethan ist, erreicht wird, tritt insbesondere dann auf, wenn diese Mischungen Flammschutzmittel enthalten, insbesondere Aluminiumhydroxid, Phosphorsäureester und/oder ein Schichtsilikat. Im Unterschied zu erfindungsgemäßen Mischungen hat sich gezeigt, dass bei Mischungen auf Basis von Polyurethan, die als Flammschutzmittel z.B. Aluminiumhydroxid, Phosphorsäureester und/oder Bentonit enthalten, durch den Zusatz herkömmlicher organischer Antioxidantien keine Verbesserung der Alterungsbeständigkeit erreicht werden kann.

Entsprechend weisen bevorzugte erfindungsgemäßen Mischungen mit einem Gehalt an Aluminiumhydroxid, Phosphorsäureester und/oder Schichtsilikat mit dem Polyurethan sowohl die flammwidrigen Eigenschaften auf, eine im Brandfall geringere frei werdende Energie und eine geringere Menge entstehenden Rußes, als auch auf Grund des Gehalts an einer anorganischen Zinkverbindung und/oder einer anorganischen Borverbindung die erhöhte Alterungsbeständigkeit. Die Erhöhung der Alterungsbeständigkeit durch den Gehalt an einer anorganischen Zinkverbindung und/oder einer anorganischen Borverbindung tritt auch bei Mischungen mit TPU auf, die ein Flammschutzmittel enthalten, das in der Regel zu einer Verringerung der Alterungsbeständigkeit gegenüber TPU ohne Flammschutzmittel führt.

### Genaue Beschreibung der Erfindung

Die Erfindung wird nun anhand von Beispielen erläutert, die die verbesserte Alterungsbeständigkeit erfindungsgemäßer Polyetherurethanmischungen gegenüber solchen Mischungen auf Basis von Polyetherurethan zeigt, die den erfindungsgemäßen Zusatz an einer Zinkverbindung und/oder einer Borverbindung nicht aufweisen.

Die nachfolgende Tabelle zeigt Zusammensetzungen, in denen die Komponenten in Gewichtsanteilen angegeben sind. Die Mischungen wurden jeweils in einem Innenkneter hergestellt und anschließend in einer beheizbaren Presse zu Platten mit einer Dicke von ca. 0,8 mm geformt. Zugfestigkeit (Festigkeit) und Dehnung (%) wurden nach EN 60811-1-1 gemessen.

**Tabelle: Zusammensetzungen auf Basis von Polyetherurethan und deren Eigenschaften**

| | Mischung Nr. | | | | | | |
|---|---|---|---|---|---|---|---|
| | 1 | 2 | 3 | 4 | 5 | 6 | 7 |
| Polyether-urethan | 100 | 100 | 100 | 100 | 100 | 100 | 100 |
| Aluminium-hydroxid | 65 | 65 | 65 | 65 | 63 | 63 | 63 |
| Phosphor-säureester | 20 | 20 | 20 | 20 | 18 | 18 | 18 |
| Schicht-silikat | 10 | 10 | 10 | 10 | 10 | 10 | 10 |
| AO-41 | | 0,5 | | | | | |
| AO-25 | | | 0,5 | | | | |
| AO-18 | | | | 0,5 | | | |
| ZnO | | | | | 5,0 | | |
| Zinkborat | | | | | | 3,0 | |
| Magnesium-borat | | | | | | | 6,0 |

| vor Alterung | | | | | | | |
|---|---|---|---|---|---|---|---|
| Festigkeit [N/mm²] | 23,9 | 24,3 | 22,9 | 22,8 | 23,2 | 27,1 | 25,2 |
| Dehnung [%] | 612 | 612 | 614 | 622 | 602 | 515 | 512 |

| nach Alterung 113°C/7d Umluftofen 150LW/h | | | | | | | |
|---|---|---|---|---|---|---|---|
| Festigkeit [N/mm²] | 16,7 | 16,5 | 16,5 | 15,8 | 18,2 | 21,5 | 19,1 |
| Änderung Festigkeit [%] | -30 | -32 | -28 | -31 | -22 | -21 | -24 |
| Dehnung [%] | 648 | 591 | 609 | 590 | 608 | 536 | 520 |
| Änderung Dehnung [%] | 6 | -3 | -1 | -5 | 1 | 4 | 2 |

Die Mischung von Vergleichsbeispiel 1 ist in Anlehnung an EP 1491580 B1 angesetzt, die Vergleichsbeispiele 2, 3 und 4 zeigen die Wirkung organischer Antioxidantien in der Mischung von Beispiel 1 auf die Alterungsbeständigkeit.

Die Vergleichsbeispiele zeigen, dass der Zusatz eines organischen Antioxidationsmittels zu keiner Erhöhung der Festigkeit über die Alterung führt, die durch Inkubation bei 113 C° für 7 Tage im Umluftofen simuliert wurde.

Die Beispiele 5, 6 und 7 sind erfindungsgemäß und zeigen, dass der Zusatz von einer Zinkverbindung und/oder einer Borverbindung, insbesondere eines Borats, zu einer thermoplastischen Mischung auf Basis von Polyetherurethan den Festigkeitsabfall signifikant verringert, der durch eine Wärmebehandlung verursacht wird, die die Alterung simuliert. Der erfindungsgemäße Effekt tritt auch dann auf, wenn die Mischung Aluminiumhydroxid, Phosphorsäureester und/oder ein Schichtsilikat enthält.

Die erfindungsgemäßen Mischungen auf Basis von Polyetherurethan, die Zinkoxid als Zinkverbindung oder Zinkborat als Zink- bzw. Borverbindung aufweisen, haben demgegenüber eine deutlich verringerte Abnahme in der Festigkeit über die Alterung, und über eine gewisse Zunahme der Dehnungsfestigkeit über die Alterung.

In den Beispielen wurde als Schichtsilikat Bentonit eingesetzt. Als Phosphorsäureester wird vorzugsweise Resorcinol-bis-diphenylphosphat verwendet.

Ähnliche Verbesserungen der Alterungsbeständigkeit werden für solche erfindungsgemäße Mischungen erhalten, die anstelle von Polyetherurethan Polyesterurethan als Polyurethan enthalten, oder Mischungen aus Polyetherurethan und Polyesterurethan.

## Patentansprüche

1. Mischung auf Basis von Polyurethan für Mäntel optischer oder elektrischer Kabel, **gekennzeichnet durch** einen Gehalt an einem anorganischen Oxid eines Elements, das aus der Gruppe ausgewählt ist, die Magnesium, Calcium, Barium, Strontium, Bor, Aluminium und Zink umfasst.

2. Mischung nach Anspruch 1, **dadurch gekennzeichnet, dass** das anorganische Oxid eines Elements aus der Gruppe ausgewählt ist, die aus Zinkoxid, Zinkborat, Magnesiumoxid, Magnesiumborat, Aluminiumoxid, Aluminiumborat, und Calciumborat besteht.

3. Mischung nach Anspruch 1 oder 2, **dadurch gekennzeichnet, dass** die Mischung zumindest ein Flammschutzmittel enthält.

4. Mischung nach Anspruch 3, **dadurch gekennzeichnet, dass** das Flammschutzmittel aus der Gruppe ausgewählt ist, die Aluminiumhydroxid , Magnesiumhydroxid, Phosphorsäureester, Schichtsilikate und Mischungen dieser umfasst.

5. Mischung nach einem der voranstehenden Ansprüche, **dadurch gekennzeichnet, dass** die Mischung
80 bis 100 Gew.-Teile Polyurethan,
45 bis 85 Gew.-Teile Aluminiumhydroxid und/oder Magnesiumhydroxid,
5 bis 35 Gew.-Teile Phosphorsäureester,
5 bis 25 Gew.-Teile Schichtsilikat,
1 bis 15 Gew.-Teile des anorganischen Oxids von Magnesium, Calcium, Barium, Strontium, Bor, Aluminium und/oder Zink aufweist.

6. Mischung nach Anspruch 5, **dadurch gekennzeichnet, dass** das anorganische Oxid ein Borat von Magnesium, Calcium, Barium, Strontium, Bor, Aluminium und/oder Zink enthält oder daraus besteht.

7. Mischung nach einem der voranstehenden Ansprüche, **dadurch gekennzeichnet, dass** die Mischung ein organisches Antioxidationsmittel aufweist.

8. Mischung nach Anspruch 7, **dadurch gekennzeichnet, dass** das Antioxidationsmittel aus der Gruppe ausgewählt ist, die β-Dicumyldiphenylamin (AO-41), 2,2'-Thiodiethylbis-[3-(3,5-di-tert. butyl-4-hydroxyphenyl)-propionat] (AO-25) und Pentaerythrityl-tetrakis-[3-(3,5-di-tert. butyl-4-hydroxyphenyl)-propionat] (AO-18) umfasst.

9. Mischung nach einem der voranstehenden Ansprüche, **dadurch gekennzeichnet, dass** die Mischung aus
80 bis 100 Gew.-Teilen Polyurethan,
45 bis 85 Gew.-Teilen Aluminiumhydroxid und/oder Magnesiumhydroxid,
5 bis 35 Gew.-Teilen Phosphorsäureester,
5 bis 25 Gew.-Teilen Schichtsilikat,
1 bis 15 Gew.-Teilen des anorganischen Oxids,
optional einem organischen Antioxidationsmittel
und Farbstoff besteht.

10. Mischung nach einem der voranstehenden Ansprüche, **dadurch gekennzeichnet, dass** sie im Anschluss an eine Behandlung bei 113 C° über 7 Tage eine Verringerung der Zugfestigkeit um maximal 25% aufweist.

11. Mischung nach einem der voranstehenden Ansprüche, **dadurch gekennzeichnet, dass** der Phosphorsäureester ein schwer flüchtiger Phosphorsäureester ist.

12. Mischung nach einem der voranstehenden Ansprüche, **dadurch gekennzeichnet, dass** das anorganische Oxid Zinkoxid und/oder Zinkborat ist.

13. Mischung nach einem der voranstehenden Ansprüche, **dadurch gekennzeichnet, dass** das anorganische Oxid Zinkborat und/oder Magnesiumborat ist.

14. Leitung oder elektrisches Kabel mit einem Mantel auf Basis von Polyurethan, **dadurch gekennzeichnet, dass** der Mantel eine Mischung nach einem der voranstehenden Ansprüche aufweist.

15. Leitung oder elektrisches Kabel nach Anspruch 14, **dadurch gekennzeichnet, dass** der Mantel vernetzt ist, vorzugsweise durch Strahlenvernetzung.

16. Verwendung einer Mischung nach einem der Ansprüche 1 bis 13 als Ummantelung für Kabel oder Leitungen.
